# EUROPEAN PATENT APPLICATION

(11) **EP 2 239 680 A1**
(43) Date of publication of application: **13.10.2010**
(21) Application number: 10006442.7
(22) Date of filing: 08.03.2007
(51) Int. Cl.: G06F 21/20

(54) **Computer systems**

(30) Priority: 10.03.2006 GB 0604887
(62) Divisional of application: 07712860.1
(71) Applicant: Whitlock, Michael, Paul, Arthog Gwynedd LL39 1YU (GB)
(72) Inventor: Whitlock, Michael, Paul, Arthog Gwynedd LL39 1YU (GB)
(74) Representative: Deans, Michael John Percy

(57) **Abstract**

A networked computer system comprises a network including a server, and at least one client for use by at least one user for communication with the server, at which client client data may be input into the system for processing by the server. Each client has a station code associated therewith. Each user has a user code required for logging into the system. Each client has an encryption engine adapted to combine and encrypt the station code and the user code when a user logs into the system at a particular client to provide an encrypted log-on signal. The client is coupled to transmit the encrypted log-on signal to the server. The server includes a decryption engine, and an access controller. The server includes memory storing a table of permitted combinations of station code and user code. The decryption engine is adapted to decrypt received encoded log-on signals and to configure the access controller to allow access from a particular client to and manipulation of data in the server only when the decrypted log-on signal corresponds to a permitted combination. Each client has a client memory storing a table containing a plurality of code words. The encryption engine is further adapted to encrypt the client data using code words from the table of code words to provide packets of data to be transmitted via the network to the server, each such packet being encrypted using a said code word selected for that packet or for a train of such packets from the table of code words. The decryption engine is further adapted to decrypt data packages received by the server for processing by the server. The server includes memory storing a code word table containing a plurality of code words including all code words associated with all clients authorised for communication with the server, the decryption engine being adapted to identify from each data package received by the server whether the particular said package was encoded using a code word present in the code word table and to decrypt said package using the particular said code word.

## Description

This disclosure relates to computer systems.

The problems of unauthorised access to computer systems and of manipulation of data are well understood but not, as yet, resolved. Numerous encryption systems have been proposed in the literature. Several are commercially available. The present disclosure in its alternative aspects seeks to improve upon previous such systems.

Weiss in US 5657388 discloses a system that uses a token to provide access by authorised users to a selected resource. An encrypted token personal to the user is read at a token processor and may be combined with a time-varying value and optionally, a personal identification code for the user according to an algorithm. The resultant combined code is transmitted to a processor which determines whether the user is authorised access to the resource.

According to a first aspect of this disclosure, there is provided: a networked computer system comprising: a network including: a server, and at least one client for use by at least one user for communication with said server, at which client client data may be input into the system for processing by said server, each said client having a station code associated therewith, and each said user having a user code required for logging into the system, each said client having an encryption engine adapted to combine and encrypt the station code and the user code when a said user logs into the system at a particular said client to provide an encrypted log-on signal, the client being coupled to transmit said encrypted log-on signal to the server, and the server including a decryption engine, and an access controller; the system being **characterised in that** the server includes memory storing a table of permitted combinations of station code and user code, in that the decryption engine is adapted to decrypt received encoded log-on signals and to configure said access controller to allow access from a particular client to and manipulation of data in said server only when the decrypted log-on signal corresponds to a permitted said combination, in that each said client has a client memory storing a table containing a plurality of code words, said encryption engine being further adapted to encrypt said client data using code words from said table of code words to provide packets of data to be transmitted via said network to the server, each said packet being encrypted using a said code word selected for that packet or for a train of said packets from said table of code words, in that the decryption engine is further adapted to decrypt data packages received by said server for processing by said server, and in that the server includes memory storing a code word table containing a plurality of code words including all code words associated with all clients authorised for communication with said server, said decryption engine being adapted to identify from each data package received by said server whether the particular said package was encoded using a code word present in the code word table and to decrypt said package using the particular said code word.

Preferred embodiments according to this aspect have one or more of the following features: The station code may consist of a Licence Number or, where a number of clients are covered by a single licence, of a Licence Number combined with a station identifier. The Licence Number may be embedded in a device that may be fitted to an existing personal computer. The said device may also include the encryption engine. The said device may be arranged for coupling to a personal computer by an internal or external slot, including a USB connection.

The user code may be required to be manually input by use of a keyboard, or may be embedded in a device that may be carried by the user and arranged to be coupled by a user to the client, for example by a USB connection or via a card reader, or may comprise biometric or biometrically derived data.

The decryption engine and/or the memory may be embedded in a device that may be fitted to the server via an internal or external slot.

Preferably the code words are randomly or pseudo-randomly chosen from the client code word table.

Because all data packages transmitted to the server are encoded and the particular code word employed for a particular package is selected for that package or for a train of said packages, the security of the system is enhanced.

In a preferred arrangement, the server includes an encryption engine so that any data transmitted from the server to a selected client is similarly encoded using a code word selected for each data package or for a train of said packages from a plurality of code words associated with the selected client and held in an encryption table by the server, the client having a corresponding decryption engine adapted to identify from each data package received by said server whether the particular said package was encoded using a code word associated with the particular client and present in a decryption table held by the client and to decrypt said package using the particular said code word.

Preferably, for each client, the encryption engine (and the decryption engine, when present) and memory storing the respective said table(s) may be embedded in one or more devices that may be fitted to the client via external or internal slots.

Preferably, the decryption engine of the server (and the server encryption engine, when present) and memory storing the respective table(s) may be embedded in one or more devices that may be fitted to the client via external or internal slots.

The server may have one or more devices fitted thereto via external or internal slots, the device(s) embedding both the said decryption engine and the said memory, and the said decryption engine of the server (and the server encryption engine, when present) and memory storing the respective table(s). Similarly, each client may have one or more devices fitted thereto via external or internal slots, the said device(s) embedding both the encryption engine of the client (and the client decryption engine, when present) and memory storing the respective table(s), and a said Licence Number combined with a station identifier and serving as the said station code for the said client.

In a second and alternative aspect of this disclosure, there is provided, a method of operating a networked computer system comprising a server, and at least one client authorised for communication with said server, at which client data for said server may be input into the system; the method comprising the steps of: a) controlling access from at least one user via the at least one client to said server, each said client having a station code associated therewith, and each said user having a user code required for logging into the system, said access control comprising combining and encrypting the station code and the user code when a said user logs into the system at a particular said client to provide an encrypted log-on signal, transmitting the said encrypted log-on signal to the server; decrypting the said signal; checking whether the combination of station code and user code is an allowed combination stored in memory at the server; and, if so, allowing access from the said client for the said user to, and manipulation of, data in said data processor; and b) for each user allowed access via a said client to input client data for processing by said server, encrypting said input client data to provide packets of data to be transmitted via said network to the server, each said packet being encrypted using a code word selected for that packet or for a train of said packets from a table of code words for said client, preferably randomly or pseudo-randomly; and, for each data package received by said server for processing by said server, checking whether the data package was encrypted using a code word included in a table of all code words associated with all clients authorised for communication with said server, and if so, decrypting said data package using the said code word, and processing said data package.

In the drawings, which are by way of example only:-
Fig. 1 shows a generally schematic diagram illustrating an embodiment of computer system; and
Fig. 2 is a logic flow diagram schematically illustrating operation of the system of Fig. 1.

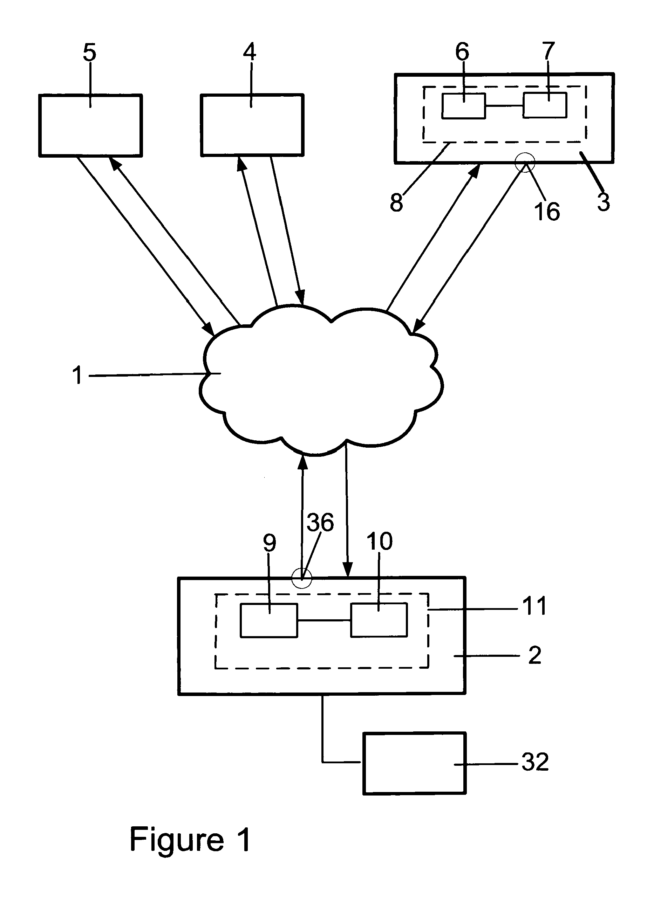

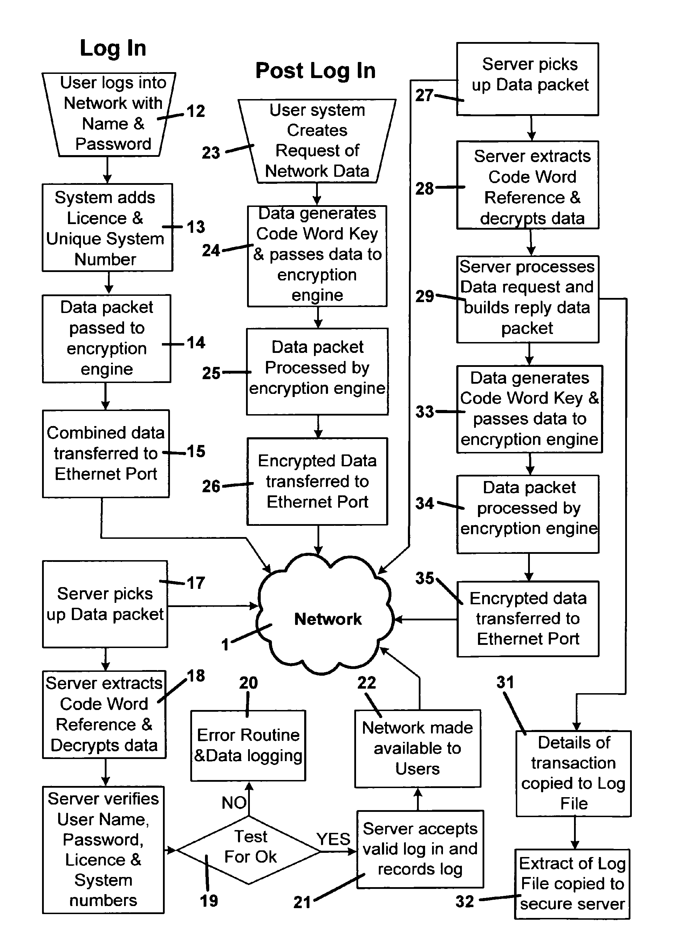

Referring first to Fig. 1, the illustrated embodiment of computer system comprises a network 1 connecting a server 2 to a plurality of clients 3, 4, 5.... The network may comprise a private network, for example an Ethernet, or a public network such as the Internet. Each of the clients is arranged to serve as a data input station for inputting data to the system. Each client includes an encryption engine 6 and a memory 7. The encryption engine and the memory may be embedded in a device 8 that may be fitted to an existing client/data input station, for example to an internal PCI slot for a personal computer or to an external PC Card slot for a laptop. Server 2 includes a decryption engine 9 and a memory 10, which may both be embedded in a device 11 that may be fitted to an internal or external slot of an existing server, preferably an internal slot, such as a high speed PCI slot. Another alternative is a USB slot. Multiple devices (cards) may be employed to balance the load, enabling a larger throughput.

The left-hand side of Fig. 2 illustrates the logical steps involved in a log-on procedure. An intending User seeks to log on to a selected client at step 12. This may be by manually inputting a conventional User Name and Password, as indicated in step 12 in Fig. 2. Alternatively, each User may have their User Name and/or Password embedded in a device which must be connected to the client at step 12, for example by connection to a USB socket or by means of a card reader. As a further alternative, the User identifying data may be biometric data or biometrically derived data.

The client adds a Licence Number (for use of a system in accordance with the present invention) and a code identifying the specific client/data input station at step 13. These together define a station code. The Licence Number, and optionally the station identifier, may be embedded in device 8 in memory 7.

In an alternative procedure, when a Licence/program card is first fitted to a particular client device and the driver(s) loaded, the card stores in its memory an identifier derived from the client, for example the serial number of its motherboard. This has the added security that it prevents cards being moved from an authorised client to one that is not. Thereafter, as part of the User verification procedure, the client data stored on the card is checked against that same data in the client itself. Further steps are only permitted if they match.

In all of these procedures, when the User logs on, a data packet comprising a user code identifying the User associated with the User Name and Password, or biometric data, and the station code is passed to encryption engine 6 in step 14, where the data is encrypted. In step 15, the encryption engine passes the encrypted data to an outlet port 16 (Fig. 1), for example an Ethernet port, connected to network 1. The station code could be any suitable code or unique number, for example the MAC address of the Ethernet card connecting the client to the network.

The server 2 picks up the data packet from network 1 at step 17. Decryption engine 9 extracts the code word reference from the packet and decrypts the data on the basis of that code word in step 18. It does this by checking in memory 10 for a table of code words. If the particular code word is found in that Table it is employed for decrypting the packet to extract the User identifier (for example User Name and Password) and the client identifier (for example: Licence Number and the station identifier). The decryption engine 9 is adapted to configure an access controller that effectively controls access to data in server 2, so that such access is denied unless the combination of identification data for the User and client (for example: User Name, Password, Licence Number and station identifier) is a permitted combination. It achieves this using the logic steps shown in Fig. 2. The combination is tested at step 19 to check whether it is a permitted combination. Such permitted combinations may be stored in memory 10. If the combination is not permitted, an error routine is initiated at step 20 and the submission of the non-permitted combination is logged. However, if the combination is permitted, the server 2 accepts the log-in as a valid log-in in step 21 and makes the network and the server available to the User concerned from client station 3 in step 22.

Once the particular User has successfully logged in at client 3, data transmitted over the network 1 is encrypted as explained on the right-hand side of Fig. 2.

At step 23, a User creates a request of network data, for example using a conventional keyboard. This causes code words to be selected from a table of code words in memory 7 and to be passed with the data to encryption engine 6 in step 24. The data is encrypted by encryption engine 6 in step 25 so that each packet of data is encrypted with a code word chosen for that particular packet from the table of code words in memory 7. In an alternative arrangement, a train of packets is encrypted using a single code word chosen for that train. The code words may be randomly or pseudo-randomly chosen. In step 26, the encryption engine 6 passes the encrypted data to outlet port 16 connected to network 1.

The server 2 picks up the data packet from network 1 at step 27. Decryption engine 9 extracts the code word reference from the packet and decrypts the data on the basis of that code word in step 28. It does this by checking in memory 10 for a table of code words. If the particular code word is found in that Table it is employed for decrypting the packet to extract the data. The server 2 then processes the data request in step 29 and builds a reply data packet if appropriate. Details of the transaction are copied to a log file in step 30 and an extract of the log file is copied at step 31 to a secure server 32 (Fig. 1). Meanwhile, for each reply data packet, a particular code word is chosen from a table of code words in memory 10 in step 33 and passed to an encryption engine to encrypt the reply data package in step 34, using its particular code word. Alternatively, a single code word may be selected for a train of packets. Preferably, the decryption engine 9 is arranged to serve as this encryption engine. The encrypted data is passed, in step 35, to an outlet port 36 from server 2 to the network 1. The data is then decrypted on reaching client 3. A decryption engine extracts the code word reference from the packet and decrypts the data on the basis of that code word. It does this by checking in memory 7 for a table of code words. If the particular code word is found in that Table it is employed for decrypting the packet to extract the data. Preferably, the encryption engine 6 is arranged to serve as this decryption engine.

Because each individual data packet or train of packets in the described system has a particular code word chosen for that specific package, the system is very secure. An attempt to use an embedded device containing the code words, but taken from another system or from another server or client, in an attempt to intercept and read data packets, will be frustrated, as the described system requires a permitted combination of User and client identifiers at log on, before access to the system can be obtained.

## Claims

1. A networked computer system comprising: a network including: a server (2), and at least one client (3, 4, 5) for use by at least one user for communication with said server, at which client client data may be input into the system for processing by said server, each said client having a station code associated therewith, and each said user having a user code required for logging into the system, each said client having an encryption engine (6) adapted to combine and encrypt the station code and the user code when a said user logs into the system at a particular said client to provide an encrypted log-on signal, the client being coupled to transmit said encrypted log-on signal to the server, and the server (2) including a decryption engine (9), and an access controller; the system being **characterised in that** the server includes memory (10) storing a table of permitted combinations of station code and user code, **in that** the decryption engine (9) is adapted to decrypt received encoded log-on signals and to configure said access controller to allow access from a particular client to and manipulation of data in said server only when the decrypted log-on signal corresponds to a permitted said combination, **in that** each said client (3, 4, 5) has a client memory (7) storing a table containing a plurality of code words, said encryption engine (6) being further adapted to encrypt said client data using code words from said table of code words to provide packets of data to be transmitted via said network to the server (2), each said packet being encrypted using a said code word selected for that packet or for a train of said packets from said table of code words, **in that** the decryption engine (9) is further adapted to decrypt data packages received by said server (2) for processing by said server, and **in that** the server includes memory (10) storing a code word table containing a plurality of code words including all code words associated with all clients authorised for communication with said server, said decryption engine (9) being adapted to identify from each data package received by said server whether the particular said package was encoded using a code word present in the code word table and to decrypt said package using the particular said code word.

2. A computer system according to Claim 1, further **characterised in that** the station code consists of a Licence Number.

3. A computer system according to Claim 1, wherein there are a plurality of said clients, the system being further **characterised in that** each station code comprises a Licence Number combined with a client identifier.

4. A computer system according to Claim 2 or Claim 3, further **characterised in that** the (each) said client has at least one slot selected from the group comprising internal and external slots, and **in that** a device (8) is fitted to said slot having embedded therein said Licence Number and, optionally, said encryption engine (6).

5. A computer system according to Claim 1, further **characterised in that** at least one of said memory (10) and said decryption engine (9) is embedded in a device (11) fitted to the data processor via an internal or external slot.

6. A computer system according to Claim 1, further **characterised in that** said encryption engine (6) includes a code word selector adapted to operate in a random or pseudo-random fashion to choose code words from the client table of code words.

7. A computer system according to Claim 1, further **characterised in that** said server (2) includes a server encryption engine adapted to encode data transmitted from the server to a selected client using a code word selected for each data package or for a train of said packages from a plurality of code words associated with the selected client (3, 4 or 5) and held in an encryption table by the server (2), the client (3, 4 or 5) including a corresponding client decryption engine adapted to identify from each data package received by said server (2) whether the particular said package was encoded using a code word associated with the particular client and present in a decryption table held by the client and to decrypt said package using the particular said code word.

8. A computer system according to Claim 7, further **characterised in that**, for each client (3, 4 or 5), the encryption engine (6), the client decryption engine and memory storing the table of code words and the client decryption table are embedded in at least one device fitted to the client via at least one slot selected from the group comprising external and internal slots.

9. A computer system, according to Claim 7, further **characterised in that** the decryption engine (9) of the server (2), the server encryption engine, and memory storing the table of permitted combinations, the code word table and the encryption table are embedded in at least one device fitted to the server via external or internal slots.

10. A method of operating a networked computer system comprising a server, and at least one client authorised for communication with said server, at which client data for said server may be input into the system; the method comprising the steps of: a) controlling access from at least one user via the at least one client to said server, each said client having a station code associated therewith, and each said user having a user code required for logging into the system, said access control comprising combining and encrypting the station code and the user code when a said user logs into the system at a particular said client to provide an encrypted log-on signal, transmitting the said encrypted log-on signal to the server; decrypting the said signal; checking whether the combination of station code and user code is an allowed combination stored in memory at the server; and, if so, allowing access from the said client for the said user to, and manipulation of, data in said data processor; and b) for each user allowed access via a said client to input client data for processing by said server, encrypting said input client data to provide packets of data to be transmitted via said network to the server, each said packet being encrypted using a code word selected for that packet or for a train of said packets from a table of code words for said client, preferably randomly or pseudo-randomly; and, for each data package received by said server for processing by said server, checking whether the data package was encrypted using a code word included in a table of all code words associated with all clients authorised for communication with said server, and if so, decrypting said data package using the said code word, and processing said data package.

11. A method according to Claim 10, wherein each said station code includes a client authorising Licence Number embedded in a device receivable in an internal or external slot of a said client, the method including the steps of automatically writing an identifier derived from the particular client to any new said device on first insertion thereof into a said internal or external slot, and thereafter, whenever access to said server is sought via a said client, first checking that the identifier incorporated in its device corresponds to the identifier of the client itself, thereby preventing client authorising Licence Number devices being wrongly transferred to non-authorised clients.
